# EUROPEAN PATENT SPECIFICATION

(11) **EP 1 495 586 B1**
(45) Date of publication and mention of the grant of the patent: **03.10.2007**
(21) Application number: 02807215.5
(22) Date of filing: 18.04.2002
(51) Int. Cl.: H04L 12/28, H04Q 7/38

(54) **METHOD, SYSTEM AND DEVICE FOR SERVICE SELECTION VIA A WIRELESS LOCAL AREA NETWORK**
VERFAHREN, SYSTEM UND EINRICHTUNG ZUR DIENSTAUSWAHL ÜBER EIN DRAHTLOSES LOKALES NETZWERK
PROCEDE, SYSTEME ET DISPOSITIF DE SELECTION DE SERVICE PAR LE BIAIS D'UN RESEAU LOCAL SANS FIL

(43) Date of publication of application: 12.01.2005
(73) Proprietor: Nokia Corporation, 02150 Espoo (FI)
(72) Inventor: MIKKONEN, Jouni, FIN-33820 Tampere (FI); HAVERINEN, Henry, FIN-41120 Puuppola (FI)
(74) Representative: Giver, Sören Bo
(86) International application number: PCT/IB2002/001273
(87) International publication number: WO 2003/088578

(56) References cited:
- WO-A1-01/76134
- CALHOUN P. ET AL.: 'Mobile IP network access identifier extension for IPv4' NETWORK WORKING GROUP, REQUEST FOR COMMENTS: 2794, [Online] March 2000, XP002979412 Retrieved from the Internet: <URL:http.www.ietf/rgc/rfc2794.txt> [retrieved on 2002-11-08]
- 'Cisco Service Selection Gateway' 1992-2001 CISCO SYSTEMS, INC. 3 PAGES, XP002979413
- ABOBA MICROSOFT M BEADLES WORLDCOM ADVANCED NETWORKS B: "The Network Access Identifier; rfc2486.txt" January 1999 (1999-01), IETF STANDARD, INTERNET ENGINEERING TASK FORCE, IETF, CH ISSN: 0000-0003

## Description

### Technical Field of the Invention

The indention relates to a method in a system and a system for service selection via a Wireless Local Area Network (WLAN). Further the invention relates to a method in a terminal, a terminal, and a computer program.

### Background of the Invention

Today communication and access to information or specific networks via various types of data networks is important. By introducing Wireless Local Area Networks (WLAN) communication and accessing information or networks has become easier and more flexible. One example of a WLAN is defined in the IEEE 802.11 standard. For example, a person wants to get a connection via a network does not need to search for an unoccupied network socket and may freely choose the location where he want to be when connecting to the network, as long as the WLAN signals reaches this location.

However when at comes to selecting different services, or views, the network system or a service provider decide the service accessible from a terminal connecting to the WLAN based on the identity of the terminal. In the context of this application a service is a network environment that the WLAN terminal is or will be connected to, for example the service may be a local network, a private network, the Internet, a specific service provider provided network, virtual local area networks, etc. Thus, a WLAN terminal that is connecting to a network is restricted to a service predetermined by the network system or the service provider, even if the WLAN is able to provide connections to different services.

P. Calhoun and C. Perkins ,in "Mobile IP Network Access Identifier Extension for Ipv4", Network Working Group, Request for Comments: 2794, March 2000, disclose a way for a mobile station to identify itself with an AAA server. This is performed by including the Network Access Identifier (NAI) along with the Mobile IP Registration Request.

B. Aboba and M. Beadles, in "The Network Access Identifier", Network Working Group, Request for Comments: 2486, January 1999, disclose a syntax for the NAI for enabling roaming and tunnelling between different Internet Service Providers.

### Summary of the Invention

It is an object of the present invention to provide an improved WLAN system facilitating selection of various services.

This object is accomplished by means of a method for service selection according to claim 1, a system for selecting services in a network according to claim 6, a method in a terminal according to claim 9, a computer program according to claim 15, a terminal according to claim 16, an authentication server according to claim 21, and a method in an authentication server according to claim 25. Preferred embodiments of the invention are disclosed in the dependent claims.

More particularly, according to one aspect, a method for service selection in a data network comprising at least one Wireless Local Area Network (WLAN) access point, comprises:
sending, from a WLAN terminal, a network access identifier (NAI) including a service selection indicator via the WLAN access point,
receiving, at an authentication server, the network access identifier including a service selection indicator,
providing the WLAN terminal with a connection to the service that is indicated by said selection indicator.

According to another aspect, a system for selecting services in a network comprises:
at least one Wireless Local Area Network (WLAN) access point,
at least one WLAN terminal comprising means for including a service selection indicator in a Network Access Identifier (NAI) and means for sending said NAI including said service selection indicator via the WLAN access point,
at least one authentication server comprising means for receiving a NAI including said service selection indicator, means for extracting said service selection indicator from said NAI and means for initiating a connection to a service indicated by said service selection indicator.

According to a further aspect, a method in a terminal for selecting services comprises:
setting a service selection indicator,
including said service selection indicator in a Network Access Identifier (NAI),
sending said NAI including said service selection indicator over a Wireless Local Area Network (WLAN),
receiving at least one message for establishing a connection to the indicated service.

According to yet a further aspect, a terminal that is enabled for communication via a Wireless Local Area Network (WLAN) comprises:
means for setting a service selection indicator,
means for including said service selection indicator in a Network Access Identifier (NAI),
means for sending said NAI including said service selection indicator,
means for establishing a connection to a indicated service in response to at least one message for establishing a connection.

According to yet another aspect, an authentication server comprises means for receiving a Network Access Identifier (NAI) including a service selection indicator, means for extracting said service selection indicator from said NAI, and means for initiating a connection between a WLAN terminal and a service indicated by said service selection indicator.

According to a further aspect, a method in an authentication server comprises receiving a Network Access Identifier (NAI) including a service selection indicator, extracting said service selection indicator from said NAI, and initiating a connection between a WLAN terminal and a service indicated by said service selection indicator.

In the context of the invention the NAI is an identifier comprising the identity identifying the WLAN terminal and/or an identity identifying the user. Further the NAI comprises an identity identifying an authentication server that are to be used for establishing a connection.

By including said service selection indicator in a NAI it becomes possible to select a service from the WLAN terminal. Thus, the user becomes free to make a selection of service, if the user or WLAN terminal is entitled to do so. Further, a NAI is used in common WLAN protocols in order to enable roaming and by including the selection indicator in the NAI the selection indicator may be sent via the WLAN using existing protocols for such communication. Thus, the service providers are able to provide service selection capability in existing or future WLAN systems without to much extra effort.

In one embodiment the NAI is of the form <user>@<realm>. In such NAI the service selection indicator may be included in the <realm> portion of the NAI.

In another embodiment an Authentication Authorization Accounting (AAA) protocol is used for the communication to the WLAN terminal. The use of an AAA protocol in combination with the service selection indicator may facilitate provision of billable services. Thus, possibly making service providers more eager to provide a plurality of services resulting in a greater freedom for users to select services.

In yet another embodiment tunnel attributes relating to an indicated service may be provided to the WLAN terminal. This makes it possible provide the user with any type of service that can be tunneled.

In a further embodiment Virtual Local Area Network (VLAN) attributes relating to an indicated service may be provided to the WLAN terminal. This makes it possible to connect the user to a user selected VLAN.

In one embodiment the user identity, the service selection indicator, and a billable feature is logged in facilitate administration of billing of services utilized by the user having said user identity.

A further scope of applicability of the present invention will become apparent from the detailed description given below. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

Other features and advantages of the present invention will become apparent from the following detailed description of a presently preferred embodiment, with reference to the accompanying drawings, in which
Fig. 1 is an schematic overview of one embodiment of an improved system, a improved WLAN terminal and an improved authentication server,
Fig. 2 is a schematic block diagram of one embodiment of the WLAN terminal in Fig. 1,
Fig. 3 is a flowchart of a service selection process in one embodiment of the WLAN terminal in Fig. 1,
Fig. 4 is a schematic block diagram of one embodiment of the authentication server in Fig. 1,
Fig. 5 is a flowchart of a service selection process in one embodiment of the authentication server in Fig. 1,
Fig. 6 is a timing diagram of one embodiment of the system in Fig. 1.

### Detailed Description of an Embodiment

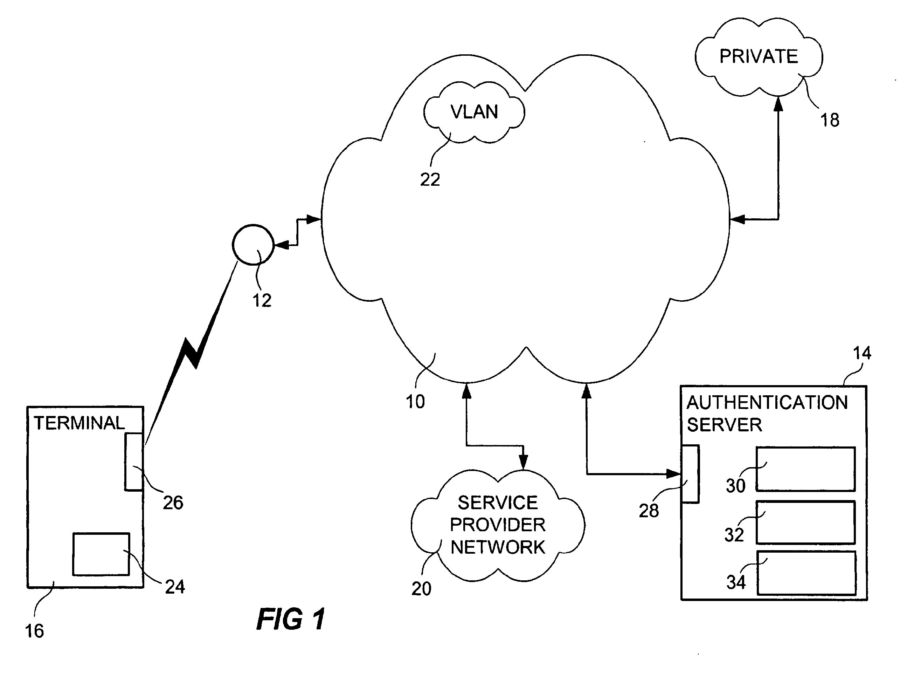

In Fig. 1 an schematic overview of a network system in which the invention may be used is shown. The system comprises a data network 10, a Wireless Local Area Network (WLAN) access point 12, an authentication server 14 and a WLAN terminal 16. The network 10 may be a Local Area Network (LAN), a Wide Area Network (WAN), the Internet, a wireless network, a wired network, etc. The WLAN access point 12 enable network communication from the WLAN terminal 16, which is arranged to communicate using WLAN protocols. The WLAN terminal 16 may be any WLAN enabled terminal, for example, a lap top, a personal digital assistant (PDA), cellular telephone, etc. The WLAN may be any type of WLAN that enables the WLAN terminal 16 to provide its identity and/or the identity of the user to the network 10 and that enables the WLAN terminal 16 to provide the identity of an authentication server 14 that are to be used to the network 10. For example, a WLAN according to IEEE 802 standard, WPAN, Bluetooth, Home RF, or HIPERLAN. In the context of the invention an identifier providing the above mentioned identities is called a Network Access Identifier (NAI).

The authentication server 14 is a system for authorizing access to a service and is provided by a service provider. The authentication server 14 includes a network connection means 28, means 30 for authenticating a WLAN terminal, means 32 for extracting a service selection indicator from a received NAI, and means 34 for providing connection attributes corresponding to a selected service. In one embodiment the authentication server 14 may be an Authentication Authorization Accounting Server.

A service provider is a company, an organization or a department that provides access to one or a plurality of network environments, for example, a local network 10, a private network 18, the Internet 10, a specific network 20 provided by the service provider, virtual local area networks (VLAN) 22, etc.

The WLAN terminal 16 comprises means 24 for adding a service selection indicator to a NAI and a WLAN transceiving means 26 for sending data packets to and receiving data packets from a WLAN access point 12.

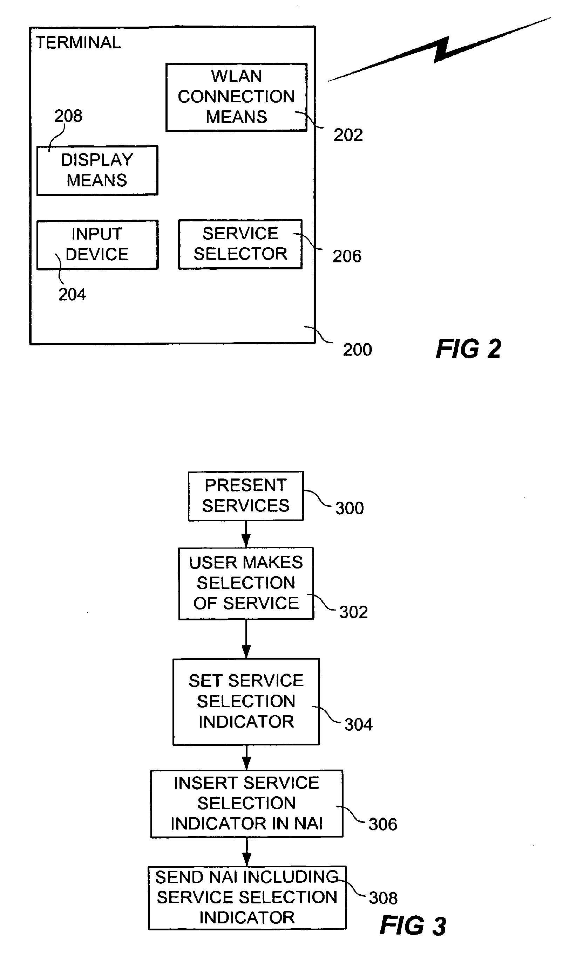

In Fig. 2 there is shown a schematic view of an embodiment of a WLAN terminal 200. The WLAN terminal comprises WLAN transceiving means 202. The transceiving means 202 comprises a protocol stack including protocols for handling the communication, the stack may include parallel protocols for communications according to different communication standards or communication methods. At least one protocol at the data link layer, according to the Open System Interconnection (OSI) reference model, ISO 7498, is arranged to include a NAI in a data packet for transmission to the WLAN access point.

According to one embodiment, the WLAN terminal comprises input means 204 and service selector means 206. The service selector means 206 is arranged to receive an input from the input means 204 and include a service selection indicator in the NAI. The input received from the input means 204 may, for example, be the complete service selection indicator that is to be included in the NAI or it may be a reference to a service selection indicator stored in the WLAN terminal 200. In the latter case the service selector means 206 retrieves the complete service selection indicator and includes it in the NAI. The input means 204 may, for example, be a keyboard, a scanner, a pressure sensitive surface, a microphone combined with voice recognition, a pointing device etc.

In one embodiment the WLAN terminal 200 comprises display means 208. In such embodiment the service selector means 206 may be arranged to present a list of services to select from.

In an embodiment, in which the WLAN operates according to IEEE 802, the NAI may look like <username>@<realm>. The <username> is the identity of the user and/or the WLAN terminal and the <realm> is the identity of the authentication server that is to handle the service request from the terminal. Such NAI may, for example, look like name@serviceprovider.com. The service selection indicator may be inserted anywhere in the NAI. In one embodiment the service selection indicator is inserted between the "@" and the <realm>, i.e. <username>@<service selection indicator><realm>, but the service selection indicator may be inserted anywhere in the NAI.

In Fig. 3 there is shown a flowchart of the service selection process in one embodiment of a WLAN terminal. The WLAN terminal starts with presenting a list of services on the display device, step 300. Then a user of the WLAN terminal is able to make a selection from said list of services, step 302. The user may do the selection by inputting a reference number referring to the desired service in the list, by pointing and clicking at the desired service, by speaking a reference to a selection into a microphone, etc. From the selection made by the user a reference to the selected service is generated and by means of this reference the WLAN terminal retrieves and sets a service selection indicator, step 304. Then the WLAN terminal insert the service selection indicator into the NAI, step 306. When the service selection indicator is inserted in the NAI the WLAN terminal sends the service request, included in the NAI, over the WLAN, step 308.

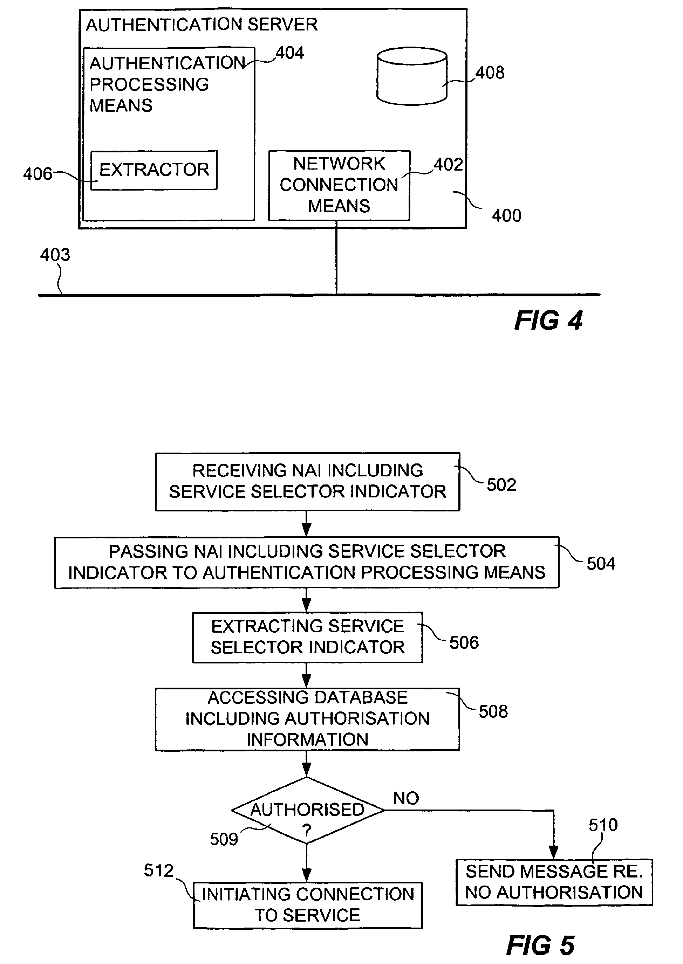

Now referring to Fig. 4 and Fig. 5. In Fig. 4 one embodiment of the authentication server 400 is schematically shown and in Fig. 5 an flowchart over the service selection process in one embodiment of the authentication server 400 is shown. The authentication server 400 includes a network connection means 402 for communication over the network 403 that it is connected to. The network 403 may, for example, be a Local Area Network (LAN), a Wide Area Network (WAN), the Internet, a wireless network, a wired network, etc. Via the network connection 402 the authentication server 400 receives a data packet carrying a NAI including a service selection indicator, step 502. The NAI is passed to an authentication processing means 404, step 504. The authentication processing means 404 comprises means 406 for extracting a service selection indicator from a NAI. The means 406 for extracting a service selection indicator extracts the service indicator from the NAI, step 506. Then the authentication processing means 404 access a database 408 including information regarding who or which devices and/or users that are authorized to connect to specific services, step 508. The database 408 may be provided within the authentication server or as one or a plurality of external databases connected directly to the authentication server or via the network connection. Thus, the authentication server 404 utilizes the identity included in the NAI and the service selection indicator to determine whether the sender of the NAI is authorized to connect to the service that the service selection indicator points out or not, step 509. If the sender is not authorized to connect to the service, then a message indicating that the authorization for the requested service has failed is sent to the requesting WLAN terminal, step 510. However, if the sender is authorized to connect to the service, then the authentication server initiate the connection of the WLAN terminal to the service, step 512, for example, by sending to the WLAN terminal the attributes necessary for setting up the connection.

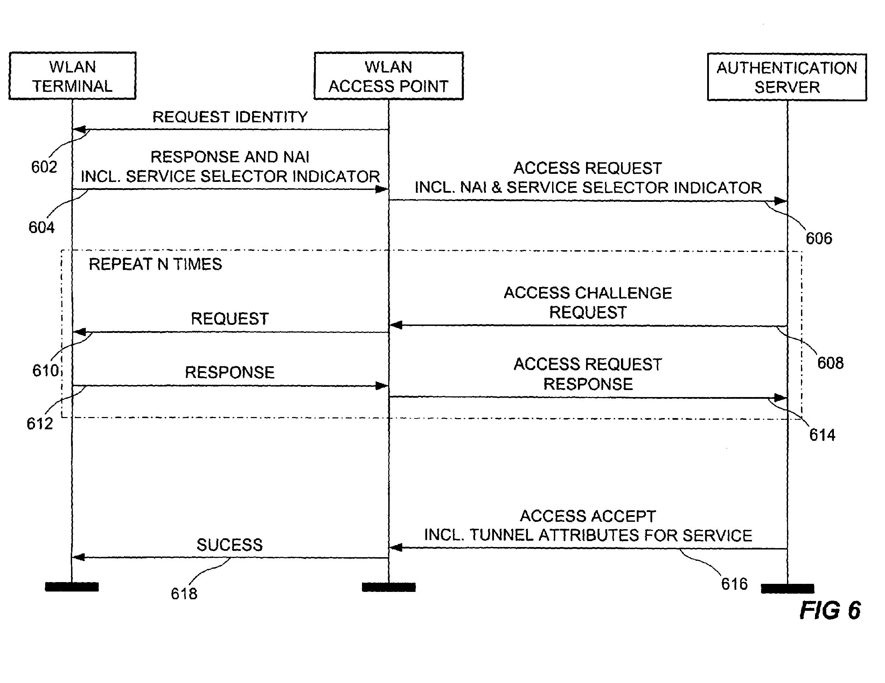

In Fig. 6 there is shown an example timing diagram of one embodiment. In the timing diagram the Extensible Authentication Protocol (EAP) and the access control protocol called "Remote Authentication Dial-In User Service" (RADIUS) is used, however, any protocol resulting in corresponding functionality may be used, e.g. Diameter, which is a protocol developed from the RADIUS protocol, or any future Authentication Authorization Accounting protocol (AAA-protocol). The WLAN access point starts with requesting the identity of the user/WLAN terminal. For this purpose the access point sends an EAP-Request/Identity packet, 602, to the WLAN terminal. The WLAN terminal responds with an EAP-Response/Identity packet 604, which includes the NAI including the service selector indicator. The WLAN access point then sends a RADIUS Access-Request packet 606, which includes the NAI including the service selector indicator, to the authentication server. When the authentication server has received the RADIUS Access-Request packet 606 it checks whether the terminal and/or the user is authorized to connect to the requested service or not. If the user/terminal is not authorized, then the authentication server refuses the connection attempt.

However if the user/terminal is authorized, then the authentication server sends a RADIUS Access-Challenge packet 608, including an EAP-request, to the WLAN Access point. When the RADIUS Challenge-Challenge packet 608 is received at the WLAN Access point, the WLAN Access point sends an EAP-request packet 610, including the above mentioned EAP-request, to the WLAN terminal. The WLAN terminal responds to this packet 610 by sending an EAP-response packet 612 to the WLAN access point, which then sends a RADIUS Access-Request packet 614, including the EAP-response, to the authentication server. The procedure of sending packets 608, 610, 612, and 614 may be repeated N number of times. The value of N varies depending on the authentication method used.

The authentication is completed either as a failure, if the WLAN terminal and/or user failed the authentication process, or as a success, if the WLAN terminal was successfully authenticated. If the authentication is a failure the authentication server sends a failure packet to the WLAN terminal via the WLAN access point. However, if the authentication is a success the authentication server retrieves the network attributes needed for providing a connection in accordance with the service that was requested by means of the service selector indicator. For example, the network attributes may be tunnel attributes for a Virtual LAN identifier, which directs the data packets of the WLAN terminal to a specific Virtual LAN. Then the authentication server sends a RADIUS Access-Accept packet 616, including the network attributes for the requested service, to the WLAN access point. The WLAN access point then provides the WLAN terminal with an EAP-Success packet 618, and now the WLAN terminal has access to the requested service.

By making services selectable for a user and by utilizing an AAA-protocol, e.g. RADIUS, a service provider may easily create, provide and log billable services and a user may get access to an increasing number of services. For example, it is possible to generate a log of every user and the services the user has utilized. An indicator of the selected service and the identity of the user is sent to the access server by means of the NAI and is thus easily registered in the log. Further, the identity of the user/terminal may be confirmed by means of an authentication process, such process may utilize a signaling scheme generating packets corresponding to the packets 608, 610, 612, 614 in Fig. 6. Additional, a billable feature is measured and registered in the log, such billable feature may be a time interval during which the service has been used, an amount of data transferred to, from or both to and from the WLAN terminal, the number of times the service has been used, etc. The log may then be used by the service provider for billing the user.

In one embodiment the functionality of the WLAN terminal and the authentication server may be implemented by means of software code that are arranged to be run in the WLAN terminal and the authentication server, respectively.

## Claims

1. Method for service selection in a data network (10) comprising at least one Wireless Local Area Network, WLAN, access point (12), said method comprising:
sending (308), from a WLAN terminal (16, 200), a network access identifier, NAI, including a service selection indicator via the WLAN access point,
receiving (502), at an authentification server (14, 400), the network access identifier including a service selection indicator,
providing (512) the WLAN terminal with a connection to the service that is indicated by said selection indicator.

2. Method according to claim 1, wherein the NAI is of the form <user>@<realm> and the service selection indicator is included in the <realm> portion of the NAI.

3. Method according to anyone of claim 1 or 2, wherein communication to and from said WLAN terminal utilizes an Authentication Authorization Accounting, AAA, protocol.

4. Method according to anyone of claims 1-3, wherein said providing the WLAN terminal with a connection includes transferring tunnel attributes to said WLAN terminal.

5. Method according to anyone of claims 1-4, wherein said providing the WLAN terminal with a connection includes transferring Virtual Local Area Network attributes to said WLAN terminal.

6. A system for selecting services in a network (10), the system comprising:
at least one Wireless Local Area Network, WLAN, access point (12),
at least one WLAN terminal (16, 200) comprising means for including a service selection indicator in a Network Access Identifier, NAI, and means for sending said NAI including said service selection indicator via the WLAN access point,
at least one authentication server (14, 400) comprising means for receiving a NAI including said service selection indicator, means for extracting said service selection indicator from said NAI and means for initiating a connection to a service indicated by said service selection indicator.

7. A system according to claim 6, wherein said means for initiating a connection is arranged to send tunnel, atttributes relating to said connection.

8. A system according to anyone of claims 6-7, wherein said means for initiating a connection is arranged to send Virtual Local Area Network, VLAN, attributes relating to said connection.

9. A method in a terminal (16, 200) for selecting services, said method comprising:
setting (304) a service selection indicator,
including (306) said service selection indicator in a Network Access Identifier, NAI,
sending (308) said NAI including said service selection indicator over a Wireless Local Area Network, WLAN,
receiving (512) at least one message for establishing a connection to the indicated service.

10. Method according to claim 9, further comprising receiving (302) an input from the user indicating a selected service.

11. Method according to anyone of claims 9-10, further comprising presenting (300) selectable services for a user.

12. Method according to anyone of claims 9-11, wherein the NAI is of the form <user>@<realm> and the service selection indicator is included in the <realm> portion of the NAI.

13. Method according to anyone of claims 9-12, wherein said receiving at least one message established a connection further comprises receiving tunnel attributes for use in establishing the connection.

14. Method according to anyone of claims 9-13, wherein said receiving at least one message establishing a connection further comprises receiving Virtual Local Area Network, VLAN, attributes for use in establishing the connection.

15. A computer program directly loadable into the internal memory of a terminal (16, 200), the computer program comprising software code portions for performing the method of anyone of claims 9-14.

16. A terminal (16, 200) that is enabled for communication via a Wireless Local Area Network, WLAN, (10), said terminal comprising:
means for setting a service selection indicator, means for including said service selection indicator in a Network Access Identifier, NAI,
means for sending said NAI including said service selection indicator,
means for establishing a connection to a indicated service in response to at least one message for establishing a connection.

17. Terminal according to claim 16, further comprising input means for input of an indicator of a selected service.

18. Terminal according to anyone of claims 16-17, further comprising means for presenting selectable services for a user.

19. Terminal according to anyone of claims 16-18, wherein said means for establishing a connection is arranged to establish a connection based on received tunnel attributes.

20. Terminal according to anyone of claims 16-19, wherein said means for establishing a connection is arranged to establish a connection based an received Virtual Local Area Network, VLAN, attributes.

21. An authentication server (14, 400) comprising:
means for receiving a Network Access Identifier, NAI, including a service selection indicator,
means for extracting said service selection indicator from said NAI, and
means for initiating a connection between a WLAN terminal (16, 200) and a service indicated by said service selection indicator.

22. Authentication server according to claim 21, further comprising means for retrieving attributes for setting up a connection to the service indicated by said service selection indicated.

23. Authentication server according to anyone of claims 21-22, wherein the authentication server is a authentication authorization accounting server.

24. Authentication server according to anyone of claims 21-23, further comprising a log including at least one record, which includes a user identity, a service selection indicator, and a value representing a billable feature.

25. A method in an authentication server (14, 400) comprising:
receiving (502) a Network Access Identifier, NAI, including a service selection indicator,
extracting (506) said service selection indicator from said NAI, and
initiating (512) a connection between a WLAN terminal and a service indicated by said service selection indicator.

26. Method according to claim 25, wherein said initiating a connection comprises sending connection attributes related to the service that is indicated by said service selection indicator.

27. Method according to anyone of claims 25-26, further comprising controlling if a user identified in the NAI is authorized to access the service indicated in the NAI.

28. Method according to anyone of claims 25-27, further comprising logging a billable feature for an identified user utilizing an indicated service.

## Patentansprüche

1. Verfahren zur Dienstauswahl in einem Datennetzwerk (10), das mindestens einen Zugangspunkt (12) eines drahtloses lokales Netzwerk, WLAN, umfasst, wobei das Verfahren umfasst:
Senden (308) von einem WLAN-Endgerät (16, 200) einer Netzwerkzugangskennung, NAI, die einen Dienstauswahlindikator einschließt, Über den WLAN-Zugangspunkt,
Empfangen (502) an einem Authentifizierungsserver (14, 400) der Netzwerkzugangskennung, die einen Dienstauswahlindikator einschließt,
Bereitstellen (512) einer Verbindung zu dem Dienst, der durch den Auswahlindikator angegeben wird, an dem WLAN-Endgerät.

2. Verfahren gemäß Anspruch 1, wobei die NAI die Form <user>@<realm> aufweist und der Dienstauswahlindikator in dem <realm> Abschnitt der NAI umfasst ist.

3. Verfahren gemäß einem der Ansprüche 1 oder 2, wobei Kommunikation zu und von dem WLAN-Endgerät ein Authentication Authorization Accounting, AAA, Protokoll verwendet.

4. Verfahren gemäß einem der Ansprüche 1 bis 3, wobei das Bereitstellen einer Verbindung an dem WLAN-Endgerät Übermitteln von Tunnelattributen an das WLAN-Endgerät umfasst.

5. Verfahren gemäß einem der Ansprüche 1 bis 4, wobei das Bereitstellen einer Verbindung an dem WLAN-Endgerät Übermitteln von Attributen eines virtuellen lokalen Netzwerks an das WLAN-Endgerät umfasst.

6. System zum Auswählen von Diensten in einem Netzwerk (10), wobei das System umfasst:
mindestens einen Zugangspunkt (12) eines drahtlosen lokalen Netzwerks, WLAN, mindestens ein WLAN-Endgerät (16, 200), das ein Mittel zum Einschließen eines Dienstauswahlindikators in eine Netzwerkzugangskennung, NAI, und ein Mittel zum Senden der NAI, die den Dienstauswahlindikator einschließt, über den WLAN-Zugangspunkt umfasst,
mindestens einen Authentifizierungsserver (14, 400), der ein Mittel zum Empfangen einer NAI, die den Dienstauswahlindikator umfasst, ein Mittel zum Extrahieren des Dienstauswahlindikators aus der NAI und ein Mittel zum Initiieren einer Verbindung zu einem Dienst umfasst, der durch den Dienstauswahlindikator angegeben, wird.

7. System gemäß Anspruch 6, wobei das Mittel zum Initiieren einer Verbindung eingerichtet ist, die Verbindung betreffende Tunnelattribute zu senden.

8. System gemäß einem der Ansprüche 6 bis 7, wobei das Mittel zum Initiieren einer Verbindung eingerichtet ist, die Verbindung betreffende Attribute eines virtuellen lokalen Netzwerks, VLAN, zu senden.

9. Verfahren in einem Endgerät (16, 200) zum Auswählen von Diensten, wobei das Verfahren umfasst:
Setzen (304) eines Dienstauswahlindikators,
Einschließen (306) des Dienstauswahlindikators in eine Netzwerkzugangskennung, NAI,
Senden (308) der NAL die den Dienstauswahlindikator einschließt, über ein drahtloses lokales Netzwerk, WLAN,
Empfangen (512) mindestens einer Nachricht zum Herstellen einer Verbindung zu dem angegebenen Dienst.

10. Verfahren gemäß Anspruch 9, ferner umfassend Empfangen (302) einer des Benutzers, die einen ausgewählten Dienst anzeigt.

11. Verfahren gemäß einem der Ansprüche 9 bis 10, ferner umfassend Präsentieren (300) auswählbarer Dienste einem Benutzer.

12. Verfahren gemäß einem der Ansprüche 9 bis 11, wobei die NAI die Form <user>@<realm> und der Dienstauswahlindikator in dem <realm> Abschnitt der NAI umfasst ist.

13. Verfahren gemäß einem der Ansprüche 9 bis 12, wobei das Empfangen mindestens einer die eine Verbindung herstellt, ferner Empfangen von Tunnelattributen zur Verwendung beim Herstellen der Verbindung umfasst.

14. Verfahren gemäß einem der Ansprüche 9 bis 13, wobei das Empfangen mindestens einer Nachricht, die eine Verbindung herstellt, ferner Empfangen von Attributen eines virtuellen lokalen Netzwerks, VLAN, zur Verwendung beim Herstellen der Verbindung umfasst.

15. Computerprogramm, das unmittelbar in den internen Speicher eines Endgeräts (16, 200) ladbar ist, wobei das Computerprogramm Softwarecodeabschnitte zum Ausführen des Verfahrens nach einem der Ansprüche 9 bis 14 umfasst.

16. Endgerät (16, 200), das über ein drahtloses lokales Netzwerk, WLAN, (10) kommunizieren kann, wobei das Endgerät umfasst:
ein Mittel zum Setzen eines Dienstauswahlindikators, ein Mittel zum Einschließen des Dienstauswahlindikators in eine Netzwerkzugangskennung, NAI,
ein Mittel zum Senden der NAI die den Dienstauswahlindikator einschließt,
ein Mittel zum Hersteller einer Verbindung zu einem angegebenen Dienst in Reaktion auf mindestens eine Nachricht zum Herstellen einer Verbindung.

17. Endgerät gemäß Anspruch 16, ferner umfassend ein Eingabemittel zum Eingeben eines Indikators für einen ausgewählten Dienst.

18. Endgerät gemäß einem der Ansprüche 16 bis 17, ferner umfassend ein Mittel zum Präsentieren auswählbarer Dienste einem Benutzer.

19. Endgerät gemäß einem der Ansprüche 16 bis 18, wobei das Mittel zum Herstellen einer Verbindung eingerichtet ist, eine Verbindung basierend auf empfangenen Tunnelattributen herzustellen.

20. Endgerät gemäß einem der Ansprüche 16 bis 19, wobei das Mittel zum Herstellen einer Verbindung eingerichtet ist, eine Verbindung basierend auf empfangenen Attributen eines virtuellen lokalen Netzwerks, VLAN, herzustellen.

21. Authentifizierungsserver (14,400), umfassend:
ein Mittel zum Empfangen einer Netzwerkszugangskennung, NAI, die einen Dienstauswahlindikator umfasst,
ein Mittel zum Extrahieren des Dienstauswahlindikators aus der NAI, und
ein Mittel zum Initiieren einer Verbindung zwischen einem WLAN-Endgerät (16, 200) und einem Dienst, der durch den Dienstauswahlindikator angegeben wird.

22. Authentifizierungsserver gemäß Anspruch 21, ferner umfassend ein Mittel zum Abrufen von Attributen zum Aufbauen einer Verbindung zu dem Dienst, der durch den Dienstauswahlindikator angegeben wird.

23. Authentifizierungsserver gemäß einem der Ansprüche 21 bis 22, wobei der Authentifizierungsserver ein Authentication Authorization Accounting Server ist.

24. Authentifizierungsserver gemäß einem der Ansprüche 21 bis 23, ferner umfassend ein Protokoll, das mindestens einen Datensatz umfasst, der eine Benutzeridentität, einen Dienstauswahlindikator und ein Wert umfasst, der ein abrechenbares Merkmal darstellt.

25. Verfahren in einem Authentifizierungsserver (14, 400), umfassend:
Empfangen (502) einer Netzwerkszugangskennung, NAI, die einen Dienstauswahlindikator einschließt,
Extrahieren (506) des Dienstauswahlindikators aus der NAI, und
Initiieren (512) einer Verbindung zwischen einem WLAN-Endgerät und einem Dienst, der durch den Dienstauswahlindikator angegeben wird.

26. Verfahren gemäß Anspruch 26, wobei das Initiieren einer Verbindung Senden Verbindungsattribute umfasst, die den durch den Dienstauswahlindikator angegebenen Dienst betreffen.

27. Verfahren gemäß einem der Ansprüche 25 bis 26, ferner umfassend Steuern, wenn ein Benutzer, der in der NAI identifiziert wird, ist, auf den in der NAI angegebenen Dienst zuzugreifen.

28. Verfahren gemäß einem der Ansprüche 25 bis 27, ferner umfassend Protokollieren eines abrechenbaren Merkmals für einen identifizierten Benutzer, der einen angegebenen Dienst verwendet.

## Revendications

1. Procède de sélection de services dans un réseau de transmission de données (10) comprenant au moins un point d'accès (12) de réseau local sans fil, WLAN ("Wireless Local Area Network"), ledit procédé consistant à :
envoyer (308), à partir d'un terminal de réseau WLAN (16, 200) un identificateur d'accès au réseau, NAI ("Network Access identifier"), incluant un indicateur de sélection de services via le point d'accès au réseau WLAN,
recevoir (502), au niveau d'un serveur d'authentification (14, 400), l'identificateur d'accès au réseau incluant un indicateur de sélection de services
fournir (512) au terminal de réseau WLAN une connexion à un service indiqué par ledit indicateur de sélection de services.

2. Procédé selon la revendication 1, dans lequel le NAI est sous la forme <user>@<realm> et l'indicateur de sélection de services est inclus dans la portion <realm> du NAI.

3. Procédé selon l'une quelconque des revendications 1 ou 2, dans lequel la communication audit et dudit terminal de réseau WLAN utilise un protocole de comptabilité d'autorisation d'authentification, AAA ("Authentification Authorisation Accounting"),

4. Procédé selon l'une quelconque des revendications 1 à 3, dans lequel ladite fourniture au terminal de réseau WLAN d'une connexion comprend le transfert d'attributs de tunnel audit terminal de réseau WLAN.

5. Procédé selon l'une quelconque des revendications 1 à 4, dans lequel ladite fourniture au terminal de réseau WLAN d'une connexion comprend le transfert d'attributs de réseau local virtuel audit terminal de réseau WLAN.

6. Système de sélection de services dans un réseau (10), le système comprenant :
au moins un point d'accès (12) de réseau local sans fil, WLAN,
au moins un terminal de réseau WLAN (16, 200) comprenant des moyens pour inclure un indicateur de sélection de services dans un identificateur d'accès au réseau, NAI, et des moyens pour envoyer ledit NAI incluant ledit indicateur de sélection de services via le point d'accès au réseau WLAN,
au moins un serveur d'authentification (14, 400) comprenant des moyens pour recevoir un NAI incluant ledit indicateur de sélection de services, des moyens pour extraire ledit indicateur de sélection de services dudit NAI et des moyens pour démarrer une connexion à un service indiqué par ledit indicateur de sélection de services.

7. Système selon la revendication 6, dans lequel lesdits moyens pour démarrer une connexion sont agencés pour envoyer des attributs de tunnel ladite connexion.

8. Système selon l'une quelconque des revendications 6 à 7, dans lequel lesdits moyens pour démarrer une connexion sont agencés pour envoyer des attributs de réseau local virtuel, VLAN ("Virtual Local Area Network"), concernant ladite connexion.

9. Procédé dans un terminal (16, 200) pour sélectionner des services, ledit procédé consistant à :
déterminer (304) un indicateur de sélection de services,
inclure (306) ledit indicateur de sélection de services dans un identificateur d'accès au réseau, NAI,
envoyer (308) ledit NAI incluant ledit indicateur de sélection de services sur un réseau local sans fil, WLAN,
recevoir (512) au moins un message pour établir une connexion au service indiqué.

10. Procédé selon la revendication 9, consistant en outre à recevoir (302) une entrée provenant d'un utilisateur indiquant un service sélectionné.

11. Procédé selon l'une quelconque des revendications 9 à 10, consistant en outre à présenter (300) des services sélectionnables pour un utilisateur.

12. Procédé selon l'une quelconque des revendications 9 à 11, dans lequel le NAI est sous la forme <user>@<realm> et l'indicateur de sélection de services est inclus dans la portion <realm> du NAI.

13. Procédé selon l'une quelconque des revendications 9 à 12, dans lequel ladite réception d'au moins un message établissant une connexion consiste en outre à recevoir des attributs de tunnel à utiliser dans l'établissement de la connexion.

14. Procédé selon l'une quelconque des revendications 9 à 13, dans lequel ladite réception d'au moins un message établissant une connexion consiste en outre à recevoir des attributs de réseau local virtuel à utiliser dans l'établissement de la connexion.

15. Programme d'ordinateur directement chargeable dans une mémoire interne d'un terminal (16, 200), le programme d'ordinateur comprenant des portions de code de logiciel pour exécuter le procédé de l'une quelconque des revendications 9 à 14.

16. Terminal (16, 200) qui est adapté à la communication via un réseau local sans fil, WLAN, (10), ledit terminal comprenant :
des moyens pour déterminer un indicateur de sélection de services, des moyens pour inclure ledit indicateur de sélection de services dans un identificateur d'accès au réseau, NAI
des moyens pour envoyer ledit NAI incluant ledit indicateur de sélection de services,
des moyens pour établir une connexion au service indiqué en réponse à au moins un message pour établir une connexion.

17. Terminal selon la revendication 16, comprenant en outre des moyens d'entrée pour saisir un indicateur d'un service sélectionné.

18. Terminal selon l'une quelconque des revendications 16 à 17, comprenant en outre des moyens pour présenter des services sélectionnables pour un utilisateur.

19. Terminal selon l'une quelconque des revendications 16 à 18, dans lequel lesdits moyens pour établir une connexion sont agencés pour établir une connexion sur la base d'attributs de tunnel reçus.

20. Terminal selon l'une quelconque des revendications 16 à 19, dans lequel lesdits moyens pour établir une connexion sont agencés pour établir une connexion sur la base d'attributs de réseau local virtuel, VLAN, reçus,

21. Serveur d'authentification (14, 400) comprenant :
des moyens pour recevoir un identificateur d'accès au réseau, NAI, incluant un indicateur de sélection de services,
des moyens pour extraire ledit indicateur de sélection de services dudit NAI, et
des moyens pour démarrer une connexion entre un terminal de réseau WLAN (16, 200) et un service indiqué par ledit indicateur de sélection de services.

22. Serveur d'authentification selon la revendication 21, comprenant en outre des moyens pour récupérer des attributs pour configurer une connexion au service indiqué par ledit indicateur de sélection de services.

23. Serveur d'authentification selon l'une quelconque des revendications 21 à 22, dans lequel le serveur d'authentification est un serveur de comptabilité d'autorisation d'authentification.

24. Serveur d'authentification selon l'une quelconque des revendications 21 à 23, comprenant en outre un journal incluant au moins un enregistrement lequel comprend une identité d'utilisateur, un indicateur de sélection de services et une valeur représentant une caractéristique pouvant être facturée.

25. Procédé dans un serveur d'authentification (14,400) consistant à :
recevoir (502) un identificateur d'accès au réseau, NAI, incluant un indicateur de sélection de services,
extraire (506) ledit indicateur de sélection de services dudit NAI, et
démarrer (512) une connexion entre un terminal de réseau WLAN et un service indiqué par ledit indicateur de sélection de services.

26. Procédé selon la revendication 25, dans lequel ledit démarrage d'une connexion comprend l'envoi d'attributs de connexion connexes au service qui est indiqué par ledit indicateur de sélection de services.

27. Procédé selon l'une quelconque des revendications 25 à 26, consistant en outre à contrôler si un utilisateur identifié dans le NAI est autorisé à accéder au service indiqué dans le NAI.

28. Procédé selon l'une quelconque des revendications 25 à 27, consistant en outre à tenir un journal d'une caractéristique pouvant être facturée pour un utilisateur identifié utilisant un service indiqué.
